# EUROPEAN PATENT APPLICATION

(11) **EP 4 369 442 A1**
(43) Date of publication of application: **15.05.2024**
(21) Application number: 22853036.6
(22) Date of filing: 02.08.2022
(51) Int. Cl.: H01M 6/16, H01M 4/06

(54) **CYLINDRICAL LITHIUM PRIMARY BATTERY**

(30) Priority: 04.08.2021 JP 2021128622
(71) Applicant: Maxell, Ltd., Kyoto 618-8525 (JP)
(72) Inventor: TSUJI Kyoji, Kyoto 618-8525 (JP); KAWABE Keisuke, Kyoto 618-8525 (JP); KANEKO Genyo, Kyoto 618-8525 (JP); SUWADA Yuki, Kyoto 618-8525 (JP)
(74) Representative: Diehl & Partner
(86) International application number: PCT/JP2022/029577
(87) International publication number: WO 2023/013617

(57) **Abstract**

A cylindrical lithium primary battery of the present application includes an electrode body that is configured such that a positive electrode and a negative electrode are spirally wound with a separator interposed therebetween. The positive electrode includes a positive electrode current collector and positive electrode mixture layers that are disposed on both surfaces of the positive electrode current collector and contain manganese dioxide as a positive electrode active material. The manganese dioxide content per unit area of each of the positive electrode mixture layers is 0.205 to 0.227 g/cm² for one surface of the positive electrode current collector. The negative electrode includes a negative electrode current collector and two lithium layers that are disposed on one surface of the negative electrode current collector and spaced 6 to 12 mm apart in the longitudinal direction. Each of the two lithium layers has a lithium content of 0.014 to 0.017 g/cm² per unit area. The negative electrode is wound in such a manner that the negative electrode is folded back so that the folded negative electrode current collector overlaps itself, and the inner peripheral ends of the two lithium layers are respectively located outside the winding center.

## Description

### Technical Field

The present invention relates to a cylindrical lithium primary battery that includes a wound electrode body using lithium as a negative electrode.

### Background Art

With the development of IoT, LPWA (Low Power Wide Area) has recently attracted attention as a technology that reduces power consumption of IoT devices and enables long-distance wireless communication. The LPWAhas the advantage of high propagation characteristics and low power consumption, and is finding a wide range of applications, including data transmission from wearable terminals and various installation environments. As power sources for such applications, there is a growing demand for developing high-capacity batteries that can stably supply power regardless of the installation environment.

A battery suitable for this purpose may be, e.g., a lithium primary battery (non-aqueous electrolyte primary battery). Many studies have been made to increase the capacity and improve the characteristics of the lithium primary battery. For example, Patent Document 1 discloses a cylindrical non-aqueous electrolyte primary battery having excellent heavy-load pulse discharge characteristics to meet applications such as gas meter shut-off valves and wireless communications.

In the battery disclosed in Patent Document 1, a negative electrode includes a current collector and only one continuous metallic lithium containing layer formed on one side of the current collector. The metallic lithium containing layer covers 85% or more of the area of the surface of the current collector on which the metallic lithium containing layer is formed. Moreover, a lithium-aluminum alloy is formed on at least a part of the surface of the metallic lithium containing layer facing away from the current collector. Thus, a cylindrical non-aqueous electrolyte primary battery with excellent heavy-load pulse discharge characteristics can be provided.

On the other hand, a negative electrode may be configured such that two pieces of metallic lithium foil are spaced apart on the surface of a negative electrode current collector. In this case, since the thickness of the negative electrode is not uniform, displacement tends to occur when the negative electrode is stacked with a positive electrode and a separator and then spirally wound, thereby resulting in winding failure. To address this issue, Patent Document 1 teaches that only one continuous piece of metallic lithium foil is disposed on the surface of the negative electrode current collector. This configuration can reduce winding displacement during the formation of a wound electrode group, thus improving the productivity of the battery.

### Prior Art Documents

### Patent Documents

Patent Document 1: JP 2012-138225 A

### Disclosure of Invention

### Problem to be Solved by the Invention

However, the above configuration, in which one continuous piece of metallic lithium foil is disposed on the surface of the negative electrode current collector, has the following problems. To improve the battery capacity, the amount of the active material per unit area should be increased by increasing the thicknesses of the active material layers of the positive electrode and the negative electrode. When these electrodes, along with the separator, are wound around a mandrel, the portion of the negative electrode held in the mandrel becomes thick. Consequently, a winding center diameter obtained by adding the thickness of the mandrel and the thickness of the negative electrode is increased, which in turn slightly increases the winding diameter of the wound electrode body. Thus, unless the inner diameter of the outer can is slightly increased, an insertion failure will occur easily when the electrode body is inserted into the outer can.

The present application has been made to solve the above problems and provides a cylindrical lithium primary battery that has a high capacity and reduces the occurrence of insertion failure of a wound electrode body.

### Means for Solving Problem

A cylindrical lithium primary battery of the present application includes an electrode body that is configured such that a positive electrode and a negative electrode are spirally wound with a separator interposed therebetween. The positive electrode includes a positive electrode current collector and positive electrode mixture layers that are disposed on both surfaces of the positive electrode current collector and contain manganese dioxide as a positive electrode active material. A manganese dioxide content per unit area of each of the positive electrode mixture layers is 0.205 to 0.227 g/cm² for one surface of the positive electrode current collector. The negative electrode includes a negative electrode current collector and two lithium layers that are disposed on one surface of the negative electrode current collector and spaced 6 to 12 mm apart in a longitudinal direction. Each of the two lithium layers has a lithium content of 0.014 to 0.017 g/cm² per unit area. The negative electrode is wound in such a manner that the negative electrode is folded back between the two lithium layers at a position near one of the lithium layers; the folded negative electrode current collector overlaps itself, and inner peripheral ends of the two lithium layers are respectively located outside a winding center.

### Effects of the Invention

The present application can provide a cylindrical lithium primary battery with high capacity and less insertion failure of a wound electrode body.

### Brief Description of Drawing

[FIG. 1] FIG. 1 is a vertical cross-sectional view schematically illustrating an example of a cylindrical lithium primary battery of an embodiment.
[FIG. 2] FIG. 2 is a horizontal cross-sectional view of the cylindrical lithium primary battery in FIG. 1.
[FIG. 3] FIG. 3 is a partial cross-sectional view schematically illustrating an example of a wound electrode body of a cylindrical lithium primary battery of an embodiment.
[FIG. 4] FIG. 4 is a partial cross-sectional view schematically illustrating a laminated body that includes a negative electrode current collector, two pieces of metallic lithium foil, and a separator, and that is used for producing a wound electrode body of a cylindrical lithium primary battery of an embodiment.
[FIG. 5] FIG. 5 is a diagram for explaining a method for producing a wound electrode body of a cylindrical lithium primary battery of an embodiment.
[FIG. 6] FIG. 6 is a diagram for explaining a method for producing a wound electrode body of a cylindrical lithium primary battery of an embodiment.

### Description of the Invention

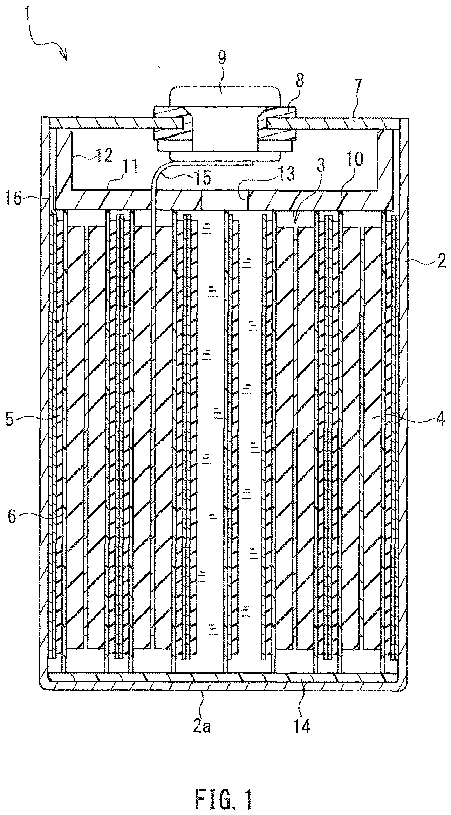

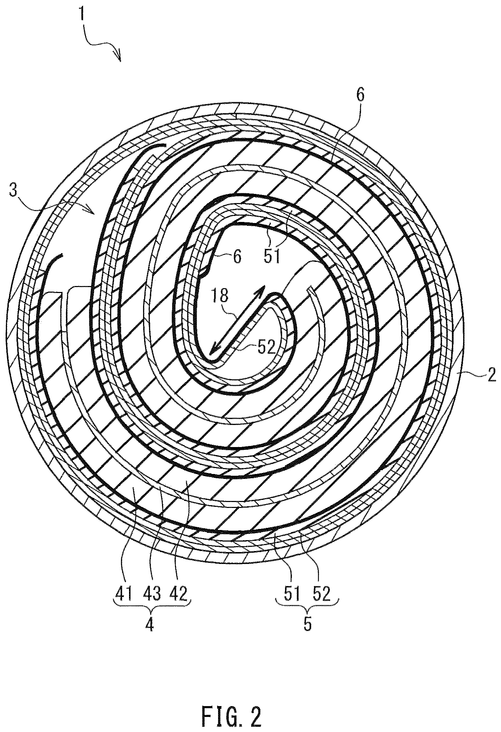

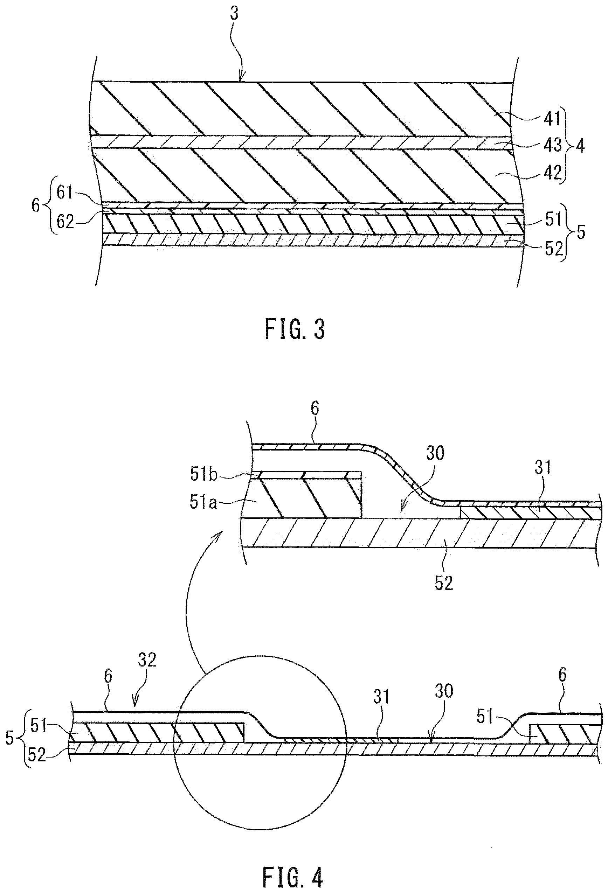

Hereinafter, an embodiment of a cylindrical lithium primary battery of the present application will be described with reference to the drawings. FIG. 1 is a vertical cross-sectional view schematically illustrating an example of a cylindrical lithium primary battery of this embodiment. FIG. 2 is a horizontal cross-sectional view of the cylindrical lithium primary battery in FIG. 1. FIG. 3 is a partial cross-sectional view schematically illustrating an example of a wound electrode body of the cylindrical lithium primary battery of this embodiment.

In FIG. 1, the cylindrical lithium primary battery 1 includes an outer can 2, an electrode body 3, a non-aqueous electrolyte solution, and a sealing body. The outer can 2 is made of, e.g., iron or stainless steel and has a cylindrical shape with a bottom and an upper opening. The electrode body 3 is inserted in the outer can 2 and configured such that a positive electrode 4 and a negative electrode 5 are spirally wound with a separator 6 interposed therebetween. The sealing body seals the upper opening of the outer can 2. In other words, the cylindrical lithium primary battery 1 in FIG. 1 has power generation elements, including the spiral electrode body 3 obtained by winding the positive electrode 4 spirally and the negative electrode 5 with the separator 6 interposed therebetween and the non-aqueous electrolyte solution, in the space surrounded by the outer can 2 and the sealing body that seals the upper opening of the outer can 2.

FIG. 2 shows a horizontal cross-sectional view of the cylindrical lithium primary battery in FIG. 1. As shown in FIG. 2, the electrode body 3 is obtained by winding a long positive electrode 4 and a long negative electrode 5 with the separator 6 interposed therebetween substantially in the form of a cylinder as a whole. In the cylindrical lithium primary battery 1 in FIG. 2, the positive electrode 4 includes a positive electrode current collector 43 and two positive electrode mixture sheets 41, 42 that are stacked with the positive electrode current collector 43 interposed therebetween. In other words, the positive electrode 4 has a structure in which positive electrode mixture layers 41, 42 are disposed on both surfaces of the positive electrode current collector 43, respectively, because of the presence of the two positive electrode mixture sheets.

The positive electrode mixture layers 41, 42 each contain manganese dioxide as a positive electrode active material. Each positive electrode active material layer generally contains a conductive assistant and a binder in addition to the positive electrode active material. Examples of conductive assistants include graphite and carbon blacks (such as Ketjenblack, acetylene black, and furnace black). These may be used alone or in combinations of two or more. Examples of the binder include fluorocarbon resins such as polytetrafluoroethylene (PTFE), polyvinylidene fluoride (PVDF), and a rubber-based binder. The fluorocarbon resins (PTFE, PVDF, etc.) may be in the form of dispersion or powder. In this case, the dispersion-type fluorocarbon resins are particularly preferred. For example, the content of the positive electrode active material is preferably 92 to 97% by mass, the content of the conductive assistant is preferably 2 to 4% by mass, and the content of the binder is preferably 1 to 4% by mass in each of the positive electrode mixture layers.

The manganese dioxide content per unit area of each of the positive electrode mixture layers 41, 42 is 0.205 to 0.227 g/cm². Thus, the positive electrode 4 has the positive electrode mixture layers, each having a manganese dioxide content of 0.205 to 0.227 g/cm² per unit area, on both surfaces of the positive electrode current collector 43, respectively. When the manganese dioxide content per unit area of each positive electrode mixture layer is 0.205 g/cm² or more for one surface of the positive electrode current collector, the capacity of the electrode can be increased, even if the positive electrode has a relatively short length. Therefore, the length (volume) of the separator can be reduced to increase the proportion of the active material in both the positive electrode and the negative electrode. This facilitates the design of a high-capacity battery. On the other hand, if the manganese dioxide content is more than 0.227 g/cm² for one surface of the positive electrode current collector, the porosity of the positive electrode mixture layer should be lower than necessary, or the thickness of the positive electrode mixture layer should be larger than necessary. In the former case, the reactivity of the positive electrode is reduced due to a decrease in the permeability of the electrolyte solution into the positive electrode mixture layer, resulting in poor load characteristics of the battery. In the latter case, the flexibility of the positive electrode mixture layer is reduced so that failure is likely to occur during winding. Thus, the manganese dioxide content per unit area of each positive electrode mixture layer is set to 0.227 g/cm² or less for one surface of the positive electrode current collector.

To increase the capacity of the battery, the density of the positive electrode mixture layer is preferably 2.7 g/cm³ or more, more preferably 2.8 g/cm³ or more, and most preferably 2.85 g/cm³ or more. On the other hand, to improve the permeability of the non-aqueous electrolyte solution and prevent a reduction in the discharge characteristics, the density of the positive electrode mixture layer is preferably 3.1 g/cm³ or less, more preferably 3.0 g/cm³ or less, and most preferably 2.95 g/cm³ or less.

The thickness of the positive electrode is, e.g., 1.5 mm or more, and is preferably 2 mm or less, and more preferably 1.8 mm or less to maintain the flexibility.

The positive electrode can be produced in the following manner. For example, the positive electrode active material is mixed with the conductive assistant and the binder, and optionally water or the like, to form a positive electrode mixture (slurry). Then, the positive electrode mixture is rolled into a preliminary sheet by, e.g., a roller. The preliminary sheet is dried and crushed into pieces. The resulting pieces are again formed into a sheet by, e.g., rolling. This sheet is used as a positive electrode mixture sheet and disposed on both surfaces of the current collector. Subsequently, the positive electrode mixture sheets and the current collector are integrated together by, e.g., pressing. Thus, layers of the positive electrode mixture sheets (i.e., positive electrode mixture layers) are provided on both surfaces of the current collector.

Specifically, e.g., the current collector and two positive electrode mixture sheets are arranged in layers so that the outer edge of the current collector is located several millimeters inward from the outer edges of the positive electrode mixture sheets. Then, a portion of the layered body that is 3 to 10 mm away from the end portion in the longitudinal direction, which is to be located near the mandrel during winding, is pressed. As a result, a positive electrode having the positive electrode active material layers on both surfaces of the current collector can be produced.

The positive electrode is not limited to that produced by the above method and may be produced by the other methods. For example, the positive electrode mixture slurry is applied to both surfaces of the current collector and dried, which is subjected to, e.g., pressing as needed. Thus, the positive electrode mixture layers are provided on both surfaces of the current collector.

The current collector of the positive electrode may be made of, e.g., stainless steel such as SUS316, SUS430, and SUS444 or aluminum and may be in the form of, e.g., plain-woven wire mesh, expanded metal, lath mesh, punched metal, or foil (plate). The thickness of the positive electrode current collector is preferably 0.1 to 0.4 mm.

Apaste-like conductive material may be applied to the surface of the positive electrode current collector. The application of the conductive material is found to significantly improve the current collection effect of the current collector even if it is in the form of mesh with a three-dimensional structure, as in the case of the current collector formed of a substantially flat plate material such as metal foil or punched metal. This may be attributed to the fact that a path which goes through the conductive material filled in the openings of the mesh current collector is effectively used together with a path in which the metal portion of the mesh current collector comes into direct contact with the positive electrode mixture layer.

The conductive material may be, e.g., a silver paste or a carbon paste. A binder for the conductive material is preferably a heat-resistant material such as water glass or an imide-based binder. This is because such a binder can be subjected to drying at a high temperature of more than 200°C in order to remove water in the positive electrode mixture layer.

The capacity of the negative electrode also needs to be increased according to the capacity of the positive electrode mixture layer. A lithium layer that serves as an active material layer of the negative electrode has a lithium content of 0.014 to 0.017 g/cm² per unit area.

To maintain the ratio of the capacity of the positive electrode to the capacity of the negative electrode in a predetermined range, the ratio of the lithium content per unit area of the lithium layer to the manganese dioxide content per unit area of the positive electrode mixture layer (for one surface of the positive electrode current collector) is preferably 0.067 to 0.077 in terms of weight ratio.

However, as described above, the positive electrode with an increased capacity has a thickness larger than a predetermined value, e.g., 1.5 mm or more. Therefore, when the negative electrode has one continuous piece of metallic lithium foil on one surface of the negative electrode current collector, as disclosed in Patent Document 1, the thickness of the portion of the negative electrode that is held in the mandrel is increased by the amount corresponding to the thickness of the metallic lithium foil (e.g., about 0.3 mm). Consequently, the winding center diameter becomes slightly larger, making it difficult to adjust the winding diameter of the wound electrode body to a certain level or lower when the positive electrode is thick. Thus, unless the inner diameter of the outer can is slightly increased, an insertion failure will occur easily when the electrode body is inserted into the outer can. This may hinder the increase in the capacity of the battery.

In this embodiment, the negative electrode has the following configuration, which can solve the above problems and also achieve a higher capacity of the battery.

The negative electrode 5 includes a single negative electrode current collector 52 and two lithium layers 51, 51 that are made of metallic lithium foil. These layers are disposed on one surface of the negative electrode current collector 52. The negative electrode current collector may be foil made of, e.g., copper, nickel, iron, or stainless steel. The thickness of the negative electrode current collector is preferably as small as possible. Specifically, it is recommended that the thickness of the negative electrode current collector be, e.g., 25 µm or less. If the negative electrode current collector is too thin, it is easily broken. Therefore, the thickness of the negative electrode current collector is preferably 5 µm or more. The width of the negative electrode current collector is preferably the same as or larger than that of the metallic lithium foil of the lithium layer. The area of the negative electrode current collector is preferably 100% or more of the area of the lithium layers. When the area of the negative electrode current collector falls in the above range, the width and length of the negative electrode current collector are the same as or larger than those of the lithium layers. This configuration can prevent the electrical connection from being cut off, even if the metallic lithium foil is cracked during discharge.

On the other hand, the larger the proportion of the negative electrode current collector that is not covered with the lithium layer, the lower the battery capacity. Therefore, the area of the negative electrode current collector is preferably 120% or less of the area of the lithium layers. In other words, the area of the lithium layers disposed on the negative electrode current collector is preferably 83% or more of the area of the negative electrode current collector.

Each surface of the two lithium layers 51, 51 facing the separator may be alloyed with aluminum. This can improve the load characteristics of the battery. Alternatively, a lithium-aluminum alloy may be formed on each of the surfaces of the lithium layers. When a lithium-aluminum alloy is formed on each of the surfaces of the lithium layers facing the separator, the lithium-aluminum alloy preferably makes up 90% or more of the area of the entire lithium layer. To increase the effect of improving the load characteristics, the ratio of the total amount of aluminum to the total amount of lithium in all the lithium layers (including lithium in the lithium-aluminum alloy) is preferably 0.095 or more in terms of weight ratio. On the other hand, since the discharge capacity of the negative electrode is reduced with an increase in the proportion of aluminum, the weight ratio is preferably 0.105 or less from the viewpoint of high capacity.

The negative electrode may further include a piece of aluminum foil formed on each of the two pieces of metallic lithium foil. When this negative electrode is used to assemble the battery, a lithium-aluminum alloy is formed on each of the surfaces of the lithium layers within the battery.

In producing the negative electrode, the metallic lithium foil has a thickness of, e.g., 0.25 to 0.35 mm, and the aluminum foil has a thickness of, e.g., 5 to 20 µm. The two lithium layers 51, 51 are two pieces of metallic lithium foil 51, 51 that are spaced 6 to 12 mm apart in the longitudinal direction of the negative electrode current collector 52. In other words, there is a portion with a width of 6 mm or more and 12 mm or less in the longitudinal direction (winding direction) between two adjacent lithium layers 51, 51, where no lithium layer is formed, and the negative electrode current collector 52 is exposed.

As shown in FIG. 2, in the electrode body 3, a single long negative electrode 5 is wound in such a manner that the negative electrode 5 is folded back between two lithium layers 51, 51 at a position near one of the lithium layers (i.e., the lithium layer facing the inner positive electrode mixture layer 42 of the positive electrode 4), e.g., at a position about 1 mm from the inner peripheral end (the end closer to the winding start side) of the above lithium layer, and substantially follows the contour of the mandrel, which is removed after winding; the folded negative electrode current collector overlaps itself, and the inner peripheral ends of the two lithium layers 51, 51 are respectively located outside a winding center 18. The winding center 18 refers to the portion of the negative electrode that is held in the mandrel (e.g., with a width of about 3 mm) and wound during winding. The length of the winding center 18 is approximately the same as the width of the mandrel. This configuration can reduce the thickness of the portion of the negative electrode that is held in the mandrel, compared to the case where the lithium layer is provided as one continuous body, and thus can reduce the winding diameter of the electrode body to be wound. Moreover, since the two lithium layers 51, 51 are spaced at least 6 mm apart in the longitudinal direction, the inner negative electrode current collector of the overlapped negative electrode current collectors has a region with a width of a predetermined value or more, where no lithium layer is formed from the winding center toward the outer positive electrode mixture layer 41 of the positive electrode 4. The width of the region that is not covered with the lithium layer may be appropriately adjusted by the length from the winding center to the outer positive electrode mixture layer 41, and is preferably 2 mm or more, and more preferably 4 mm or more from the winding center.

In the inner negative electrode current collector, the portion between the winding center 18 and the end of the positive electrode mixture layer 41 of the positive electrode 4 that is closer to the winding start side does not face the positive electrode. Therefore, the absence of the lithium layer in this portion of the negative electrode current collector can reduce the amount of lithium that is not involved in discharge and can improve the discharge efficiency. Moreover, the winding start portion of the negative electrode becomes thinner, so that the winding diameter of the electrode body to be wound can be further reduced. In view of this, the distance between the two lithium layers 51, 51 is preferably 8 mm or more.

The use of the negative electrode 5 with the above configuration in the electrode body 3 can prevent the insertion failure that would occur when the wound electrode body 3 is inserted into the outer can 2. On the other hand, if the distance between the two lithium layers 51, 51 is too large, the winding start portion of the positive electrode mixture layer will no longer face the lithium layer, and the discharge capacity may be reduced. To prevent the above problem, the distance between the two lithium layers 51, 51 is preferably 12 mm or less, and more preferably 10 mm or less.

As described above, the distance between the two lithium layers 51, 51 is preferably 8 mm or more to 10 mm or less.

In FIGS. 1 and 2, the separator 6 is illustrated as a single-layer structure. However, this embodiment must consider the risk of a short circuit due to an increase in the thickness of the positive electrode. Therefore, in this embodiment, it is preferable that the separator 6 interposed between the positive electrode 4 and the negative electrode 5 has a multilayer structure that includes, e.g., two microporous resin films 61, 62, as shown in FIG. 3. The two separators may be a combination of a microporous resin film and a nonwoven fabric.

As shown in FIG. 1, the sealing body of the cylindrical lithium primary battery 1 includes a cover plate 7 that is fixed to the inner edge of the upper opening of the outer can 2, a terminal body 9 that is placed in an opening provided in the center of the cover plate 7 via an insulation packing 8 made of, e.g., polypropylene, and an insulation plate 10 that is located under the cover plate 7. The insulation plate 10 is in the form of a round dish that opens upward and includes a disk-like base 11 and an annular side wall 12 formed along the edge of the base 11. A gas outlet 13 is provided in the center of the base 11. The cover plate 7 is received by the upper end of the side wall 12 and fixed to the inner edge of the upper opening of the outer can 2 by laser welding or crimp seal via packing. To deal with a sharp rise in the internal pressure of the battery, the cover plate 7 or the bottom 2a of the outer can 2 may have a thin portion (vent). The positive electrode 4 is connected to the lower surface of the terminal body 9 by a positive electrode lead 15. A negative electrode lead 16 is attached to the negative electrode 5 and welded to the upper inner surface of the outer can 2. A resin insulation plate 14 is placed on the bottom 2a of the outer can 2.

In FIG. 1, the terminal body 9 is not hatched to indicate the cross section in order to make the drawing easier to read. The positive electrode lead 15 and the negative electrode lead 16 are not originally shown in cross section because they are arranged at positions away from the cross section in FIG. 1.

The electrode body 3 to be inserted in the outer can 2 may be produced, e.g., by the procedure shown in FIGS. 4, 5, and 6. In FIGS. 4, 5, and 6, the separator 6 is illustrated as a single-layer structure, and the two separators 61 and 62 are not distinguished from each other.

First, as shown in FIG. 4, an adhesive tape 31 and the separator 6 are placed on the upper surface of the longitudinal central portion of the negative electrode current collector 52 so that the separator 6 is bonded to the negative electrode current collector 52. The adhesive tape 31 may be a double-sided tape. Next, two pieces of metallic lithium foil 51, 51 are crimped and fixed to the negative electrode current collector 52 on both sides of the bonded portion of the separator 6 in the longitudinal direction. In other words, a portion in which the lithium layer as a negative electrode active material is not formed and the negative electrode current collector 52 is exposed is provided on one surface of the negative electrode current collector 52, and the separator 6 is bonded to this exposed portion 30 with the adhesive tape 31. In this case, the width of the exposed portion 30 (i.e., the distance between two pieces of metallic lithium foil 51, 51 in the longitudinal direction) is 6 mm or more and 12 mm or less, as described above. Thus, the negative electrode current collector 52, two pieces of metallic lithium foil 51, 51, and the separator 6 can be integrated together to form a laminated body 32.

When a lithium-aluminum alloy is formed on the surface of the lithium layer, as shown in the enlarged view in FIG. 4, aluminum foil 51b may be further disposed on the metallic lithium foil 51a, thereby forming the laminated body. The lithium layer 51 illustrated as a single-layer structure in FIGS. 4, 5, and 6 can be a laminate of the metallic lithium foil 51a and the aluminum foil 51b, as shown in the enlarged view in FIG. 4.

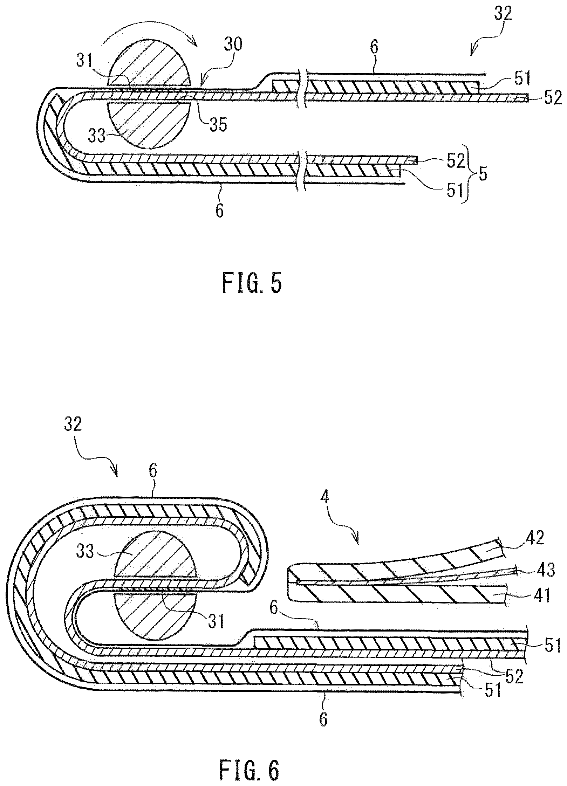

Next, as shown in FIG. 5, the laminated body 32 is put in a horizontal groove 35 of a mandrel 33. The width of the horizontal groove 35 of the mandrel 33 is 2.8 mm. In FIG. 5, the distance between the left end of the horizontal groove 35 of the mandrel 33 and the end of the metallic lithium foil 51 is about 1 mm, and the exposed portion 30, i.e., the bonded portion of the separator 6 with the adhesive tape 31 is aligned with the horizontal groove 35 of the mandrel 33.

In the above state, the mandrel 33 is rotated about a half turn in one direction (the clockwise direction in FIG. 5), and the laminated body 32 is wound around the outer surface of the mandrel 33, as shown in FIG. 6. Next, the positive electrode 4, composed of the positive electrode mixture sheets 41, 42 and the positive electrode current collector 43, is placed on the separator 6 and wound together with the laminated body 32 around the mandrel 33. After the laminated body 32 and the positive electrode 4 have been taken up on the mandrel, the mandrel 33 is removed from the wound body, and finally, the winding finish end of the metallic lithium foil 51 is fixed with a fixing tape. At this time, the negative electrode 5 is wound in such a manner that the negative electrode 5 is folded back between two pieces of metallic lithium foil 51, 51 at a position about 1 mm from one of the two pieces of metallic lithium foil 51, 51; the folded negative electrode current collector 52 overlaps itself, and the inner peripheral ends of the two pieces of metallic lithium foil 51, 51 are respectively located outside the winding center 18. The negative electrode is folded back preferably at a position, e.g., within 1.5 mm, more preferably at a position within 1.0 mm from one of the two pieces of metallic lithium foil 51, 51. Thus, as shown in FIGS. 2 and 6, the positive electrode 4 and the negative electrode 5 are wound with the separator 6 interposed therebetween, while using the exposed portion 30 that has been held in the mandrel as the winding center 18. As a result, the electrode body 3 can be obtained.

The separator of the cylindrical lithium primary battery of this embodiment may include a microporous resin film and a nonwoven fabric. Examples of the resin constituting the separator include the following: polyolefins such as polyethylene (PE) and polypropylene (PP); polyesters such as polyethylene terephthalate (PET) and polybutylene terephthalate (PBT); and polyphenylene sulfide (PPS). These may be used alone or in combinations of two or more.

When the separator is a microporous film, the thickness of the separator is preferably 7 µm or more, and more preferably 10 µm or more. The thickness of the separator is also preferably 20 µm or less, and more preferably 18 µm or less. When the separator is a nonwoven fabric, the thickness of the separator is preferably 10 µm or more, and more preferably 20 µm or more. The thickness of the separator is also preferably 80 µm or less, and more preferably 50 µm or less.

The non-aqueous electrolyte solution for the cylindrical lithium primary battery of this embodiment is a solution in which a lithium salt is dissolved in an organic solvent as an electrolyte. Examples of the lithium salt include LiClO₄, LiCFsSOs, LiC₂F₅SO₃, LiN(FSO₂)₂, and LiN(CF₃SO₂)₂.

Examples of the organic solvent include the following: cyclic carbonates such as ethylene carbonate, propylene carbonate, butylene carbonate, and vinylene carbonate; chain carbonates such as dimethyl carbonate, diethyl carbonate, and methyl ethyl carbonate; ethers such as 1,2-dimethoxyethane (ethylene glycol dimethyl ether), Diglyme (diethylene glycol dimethyl ether), Triglyme (triethylene glycol dimethyl ether), Tetraglyme (tetraethylene glycol dimethyl ether), methoxyethoxyethane, 1,2-diethoxyethane, and tetrahydrofuran; cyclic esters such as γ-butyrolactone; and nitrile. These may be used alone or in combinations of two or more. In particular, any combination of the cyclic carbonates and the ethers is preferred.

The cyclic carbonates may be preferably ethylene carbonate and propylene carbonate. The ethers may be preferably 1,2-dimethoxyethane. To ensure good lithium ion conductivity, the lithium salt concentration in the non-aqueous electrolyte solution is preferably 0.3 mol/L or more, and more preferably 0.4 mol/L or more. The lithium salt concentration is also preferably 1.2 mol/L or less, and more preferably 1.0 mol/L or less.

The above explanation of the cylindrical lithium primary battery of this embodiment refers to FIGS. 1 to 6, but these drawings only show an example of the battery of this embodiment. The battery of this embodiment is not limited to those shown in these drawings.

### Examples

Hereinafter, the cylindrical lithium primary battery disclosed in the present application will be described in detail based on examples. However, the following examples do not limit the cylindrical lithium primary battery of the present application.

### (Example 1)

### [Production of positive electrode]

A positive electrode mixture was prepared using the following procedure. First, 2 parts by mass of Ketjenblack "EC300J" (trade name) with a BET specific surface area of 800 m²/g (conductive assistant) and 94.5 parts by mass of manganese dioxide with an average particle size of 35 µm (positive electrode active material) were dry-mixed with a planetary mixer for 5 minutes. Then, water was added to the mixture in an amount corresponding to 20% (mass ratio) of the total solid content and further mixed for 5 minutes. Next, a PTFE dispersion ("D-1" manufactured by DAIKIN INDUSTRIES, LTD.) was added so that the content of PTFE was 3.5 parts by mass. Finally, water was added until the total solid content ratio reached 74% by mass and further mixed for 5 minutes, resulting in a positive electrode mixture.

Next, the positive electrode mixture was rolled into a sheet by a roller, which had a diameter of 250 mm and was adjusted to a temperature of 125 ± 5°C. The sheet was dried in a temperature environment of 105 ± 5°C until the residual water was reduced to 2% by mass or less. Thus, a preliminary sheet was obtained. Further, the preliminary sheet was crushed by a crusher into a powder with a particle size of about 0.5 mm or less. Then, the powder was again rolled by the roller to form a positive electrode mixture sheet with a thickness of 0.79 mm and a density of 2.89 g/cm³. This positive electrode mixture sheet had a manganese dioxide content of 0.216 g/cm² per unit area.

The positive electrode mixture sheet thus obtained was cut into an inner positive electrode mixture sheet (i.e., the positive electrode mixture sheet 42 in FIG. 2) with a width of 42.5 mm and a length of 67 mm and an outer positive electrode mixture sheet (i.e., the positive electrode mixture sheet 41 in FIG. 2) with a width of 42.5 mm and a length of 76 mm.

The expanded stainless steel metal (SUS316) was used as a positive electrode current collector. The expanded metal was cut to a width of 39 mm and a length of 60 mm. A ribbon of stainless steel with a thickness of 0.1 mm and a width of 3 mm was attached to the central portion of the expanded metal in the length direction by resistance welding and used as a positive electrode lead. Moreover, carbon paste (manufactured by Nippon Graphite Co., Ltd.) was applied to this expanded metal so as not to fill the meshes. Then, it was dried at 105 ± 5°C, providing a positive electrode current collector. The amount of the carbon paste applied was set so that the carbon paste was 5 mg/cm² after drying.

Next, the positive electrode current collector was interposed between the inner positive electrode mixture sheet and the outer positive electrode mixture sheet. In this state, by fixing only one edge of the layered body in the length direction, the inner and outer positive electrode mixture sheets and the positive electrode current collector were integrated together. Specifically, the inner positive electrode mixture sheet and the outer positive electrode mixture sheet were arranged to keep the edge of the inner positive electrode mixture sheet in the length direction aligned with the edge of the outer positive electrode mixture sheet in the length direction and to prevent the edge of the positive electrode current collector from protruding from the aligned edges of the two positive electrode mixture sheets. Subsequently, a portion of the layered body that was 5 mm away from the above edges of the two positive electrode mixture sheets was crimped by pressing. Thus, the inner and outer positive electrode mixture sheets were integrated with the positive electrode current collector, which was then dried with hot air at 300 ± 10°C for 15 minutes so that a sheet-type positive electrode with a thickness of 1.6 mm and a width of 42.5 mm was obtained.

### [Production of negative electrode]

Two pieces of metallic lithium foil, one with a width of 42 mm, a length of 96 mm, and a thickness of 0.29 mm, and the other with a width of 42 mm, a length of 57 mm, and a thickness of 0.29 mm, were disposed on a piece of copper foil (negative electrode current collector) with a width of 43 mm, a length of 173 mm, and a thickness of 15 µm, and were spaced 9 mm apart in the longitudinal direction. Further, two pieces of aluminum foil, one with a width of 40 mm, a length of 96 mm, and a thickness of 6 µm and the other with a width of 40 mm, a length of 57 mm, and a thickness of 6 µm, were respectively disposed on the two pieces of metallic lithium foil. Thus, a sheet-type negative electrode was obtained. The ratio of the area of the aluminum foil to the area of the metallic lithium foil was 95%. The metallic lithium foil and the aluminum foil were arranged so that their edges in the longitudinal direction as well as the edge in the width direction, which was to be located on the bottom side of the battery when the wound electrode body was inserted into the outer can, were aligned with each other. A negative electrode lead of nickel with a width of 3 mm, a length of 20 mm, and a thickness of 0.1 mm was crimped onto the metallic lithium foil.

In the sheet-type negative electrode, the lithium content in each of the lithium layers was 0.0155 g/cm² per unit area, and the area of the entire lithium layer was 95% of the area of the negative electrode current collector. The ratio of the total amount of aluminum to the total amount of lithium contained in all the lithium layers, including the lithium-aluminum alloy to be formed, was 0.0995 in terms of weight ratio.

### [Production of electrode body]

Two microporous PE films were aligned and stacked on each other, and then used as a separator. Each microporous film had a width of 49 mm, a length of 180 mm, and a thickness of 16 µm (porosity: 46%, air permeability: 200 sec/100 mL, piercing strength: 380 g).

As shown in FIG. 4, an adhesive tape was attached to the copper foil between the two pieces of metallic lithium foil of the sheet-type negative electrode, and then the two stacked microporous PE films were bonded to the adhesive tape. Thus, a laminated body was obtained in which the separator was formed on the sheet-type negative electrode. Moreover, as shown in FIGS. 5 and 6, the portion of the laminated body to which the adhesive tape had been attached was sandwiched between two halves of a split-type mandrel (with a diameter of 2.8 mm). After the negative electrode and the separator were turned once around the mandrel, the positive electrode was placed so that the fixed end portion of the positive electrode mixture sheets was located near the mandrel and further wound together with the laminated body, thus providing an electrode body shown in FIG. 2.

The distance between the folded portion of the negative electrode, which was made by the mandrel during winding, and the inner peripheral end of the metallic lithium foil facing the inner surface of the positive electrode was about 1 mm. The distance between the inner peripheral end of the metallic lithium foil facing the outer surface of the positive electrode and the winding center was about 5 mm. There was a region with a width of about 5 mm on the negative electrode current collector, where no lithium layer was formed from the winding center toward the outer positive electrode mixture layer of the positive electrode. During winding, the separator was placed so that one edge of the separator in the width direction (i.e., the edge to be located on the upper side of the battery) protruded 1.5 mm from the edge of the negative electrode (i.e., the edge to be located on the upper side of the battery). The other edge of the separator protruding from the positive electrode was bent toward the positive electrode so that the edge of the positive electrode was covered with the separator.

### [Assembly of battery]

The assembly process of the cylindrical lithium primary battery will be described with reference to FIG. 1. The PP insulation plate 14 with a thickness of 0.2 mm was placed on the bottom 2a of the outer can 2, which was made of a nickel-plated stainless steel can and had a cylindrical shape with a bottom. Then, the electrode body 3 was placed on the insulation plate 14 with the positive electrode lead 15 facing upward.

The negative electrode lead 16 of the electrode body 3 was resistance-welded to the inner surface of the outer can 2, and the positive electrode lead 15 was resistance-welded to the lower surface of the terminal body 9 after the insulation plate 10 was inserted.

Anon-aqueous solution was prepared as an electrolyte solution by dissolving LiCF₃SO₃ at a concentration of 0.7 mol/L in a mixed solvent of ethylene carbonate, propylene carbonate, and dimethoxyethane (volume ratio of 1 : 1 : 3). Then, 3.5 mL of the electrolyte solution was injected into the outer can 2. The injection was divided into 3 times, and the entire amount of the electrolyte solution was injected while reducing the pressure in the final process. After injecting the electrolyte solution, the cover plate 7 was fitted in the upper opening of the outer can 2, and the inner edge of the opening end of the outer can 2 was welded with the outer edge of the cover plate 7 through laser welding. Thus, the opening of the outer can 2 was sealed.

### [Preliminary discharge, aging]

The sealed battery was pre-discharged with a resistance of 1 Ω for 30 seconds and stored at 70°C for 6 hours. Then, the second pre-discharge of the battery was performed with a constant resistance of 1 Ω for 1 minute so that a lithium-aluminum alloy was formed on the surface of the sheet-type negative electrode facing the separator. The pre-discharged battery was aged at room temperature for 7 days, and the open-circuit voltage was measured to confirm that a stable voltage was provided. Consequently, a cylindrical lithium primary battery with an outer diameter of 17.0 mm and a total height of 50 mm was obtained.

The battery assembly was performed by preparing 100 electrode bodies, but no battery was confirmed, which caused an insertion failure when the electrode body was inserted into the outer can.

### (Example 2)

Two pieces of metallic lithium foil, one with a width of 42 mm, a length of 99 mm, and a thickness of 0.29 mm, and the other with a width of 42 mm, a length of 57 mm, and a thickness of 0.29 mm, were disposed on a piece of copper foil (negative electrode current collector) with a width of 43 mm, a length of 173 mm, and a thickness of 15 µm, and were spaced 6 mm apart in the longitudinal direction. Further, two pieces of aluminum foil, one with a width of 40 mm, a length of 99 mm, and a thickness of 6 µm, and the other with a width of 40 mm, a length of 57 mm, and a thickness of 6 µm, were respectively disposed on the two pieces of metallic lithium foil. Thus, a sheet-type negative electrode was obtained.

A cylindrical lithium primary battery was assembled in the same manner as Example 1, except that the above sheet-type negative electrode was used.

The distance between the folded portion of the negative electrode, which was made by the mandrel during winding, and the inner peripheral end of the metallic lithium foil facing the inner surface of the positive electrode was about 1 mm. The distance between the inner peripheral end of the metallic lithium foil facing the outer surface of the positive electrode and the winding center was about 2 mm. There was a region with a width of about 2 mm on the negative electrode current collector, where no lithium layer was formed from the winding center toward the outer positive electrode mixture layer of the positive electrode.

Similarly to Example 1, the battery assembly was performed by preparing 100 electrode bodies, but no battery was confirmed that caused an insertion failure when the electrode body was inserted into the outer can.

### (Comparative Example 1)

Apiece of metallic lithium foil with a width of 42 mm, a length of 162 mm, and a thickness of 0.29 mm was disposed on a piece of copper foil with a width of 43 mm, a length of 173 mm, and a thickness of 15 µm. Further, a piece of aluminum foil with a width of 40 mm, a length of 162 mm, and a thickness of 6 µm was disposed on the metallic lithium foil. Thus, a sheet-type negative electrode was obtained.

The sheet-type negative electrode and two microporous PE films, which were the same as those in Example 1, were stacked. Then, when viewed from a plan view, this laminated body was held in the mandrel at the same position as that of the laminated body held in the mandrel in Example 1. Similarly to Example 1, cylindrical lithium primary batteries were assembled by preparing 100 electrode bodies.

Seventeen electrode bodies of the 100 electrode bodies thus prepared were found to have an insertion failure when inserting the electrode body into the outer can.

The 100 wound electrode bodies in Examples 1, 2 and Comparative Example 1 somewhat varied in winding diameter. However, the electrode bodies in Examples 1, 2 did not have an insertion failure, since even the maximum winding diameter of the electrode body did not exceed the upper limit of the winding diameter of the electrode body that could be inserted in the outer can.

On the other hand, in the electrode bodies in Comparative Example 1, the lithium layer was continuously present not only in the winding center, but also in a region on the negative electrode current collector not facing the positive electrode, the region extending outward from the winding center. Therefore, the winding inner diameter of the electrode bodies was increased, and some electrode bodies had a winding diameter larger than that of the electrode body that could be inserted in the outer can. Consequently, a certain number of electrode bodies had an insertion failure.

### (Comparative Example 2)

A sheet-type negative electrode was produced in the same manner as Example 1, except that two pieces of metallic lithium foil were spaced 20 mm apart in the longitudinal direction. Then, a cylindrical lithium primary battery was assembled in the same manner as Example 1.

Similarly to Example 1, the battery assembly was performed by preparing 100 electrode bodies, but no battery was confirmed that caused an insertion failure when the electrode body was inserted into the outer can. Next, five batteries were selected from the cylindrical lithium primary batteries in each of Example 1, Example 2, and Comparative Example 2, and five batteries that did not fail during the assembly process were selected from the cylindrical lithium primary batteries in Comparative Example 1. Each of the five batteries was continuously discharged with a current value of 40 mA at 20°C, and the discharge capacity was measured until the battery voltage reached 2.0 V Table 1 shows the average of the measured values for each example.

**[TABLE 1]**

| | Discharge capacity (mAh) |
|---|---|
| Example 1 | 3480 |
| Example 2 | 3482 |
| Comparative Example 1 | 3485 |
| Comparative Example 2 | 3361 |

Examples 1 and 2, in which two lithium layers were disposed on the negative electrode current collector and spaced 6 to 12 mm apart in the longitudinal direction, and Comparative Example 1, in which the lithium layer was not separated, but continuously disposed on the negative electrode current collector, achieved the discharge capacity as designed because the lithium layer fully faced the positive electrode active material.

On the other hand, as described above, in the cylindrical lithium primary batteries in Comparative Example 1, the lithium layer was continuously present not only in the winding center, but also in a region on the negative electrode current collector not facing the positive electrode, the region extending outward from the winding center. Therefore, some electrode bodies had a winding diameter larger than the designed upper limit, leading to failure in the assembly process of the battery.

In the cylindrical lithium primary batteries in Comparative Example 2, the distance between the two lithium layers was too large, so that a part of the positive electrode active material near the winding inner end would not face the lithium layer, and the discharge capacity of the battery was reduced.

In Examples 1 and 2, the manganese dioxide content per unit area of each of the positive electrode mixture layers was adjusted to 0.205 to 0.227 g/cm² for one surface of the positive electrode current collector. The lithium content in each of the lithium layers of the negative electrode was also adjusted to 0.014 to 0.017 g/cm² per unit area in accordance with the capacity of the positive electrode. Thus, the capacity of the battery was able to be increased without making the positive electrode mixture layer too thick or too dense.

On the other hand, if the manganese dioxide content per unit area of each positive electrode mixture layer is more than 0.227 g/cm² for one surface of the positive electrode current collector, failure is likely to occur due to a decrease in the permeability of the electrolyte solution into the positive electrode mixture layer and a reduction in the flexibility of the positive electrode. This may hinder the increase in the capacity of the battery.

The present application may be embodied in forms other than those described above. The embodiments disclosed in this application are to be considered in all respects as illustrative and not limiting. The scope of this application is indicated by the appended claims rather than by the foregoing description, and all changes that come within the meaning and range of equivalency of the claims are intended to be embraced therein.

### Description of Reference Numerals

- 1: Cylindrical lithium primary battery
- 2: Outer can
- 2a: Bottom
- 3: Electrode body
- 4: Positive electrode
- 5: Negative electrode
- 6: Separator
- 7: Cover plate
- 8: Insulation packing
- 9: Terminal body
- 10: Insulation plate
- 11: Base
- 12: Side wall
- 13: Gas outlet
- 14: Insulation plate
- 15: Positive electrode lead
- 16: Negative electrode lead
- 18: Winding center
- 30: Exposed portion
- 31: Adhesive tape
- 32: Laminated body
- 33: Mandrel
- 35: Horizontal groove
- 41,42: Positive electrode mixture sheet (positive electrode mixture layer)
- 43: Positive electrode current collector
- 51: Lithium layer
- 51a: Metallic lithium foil
- 51b: Aluminum foil
- 52: Negative electrode current collector
- 61,62: Separator

## Claims

1. A cylindrical lithium primary battery comprising:
an electrode body that is configured such that a positive electrode and a negative electrode are spirally wound with a separator interposed therebetween,
wherein the positive electrode includes a positive electrode current collector and positive electrode mixture layers that are disposed on both surfaces of the positive electrode current collector and contain manganese dioxide as a positive electrode active material,
a manganese dioxide content per unit area of each of the positive electrode mixture layers is 0.205 to 0.227 g/cm² for one surface of the positive electrode current collector,
the negative electrode includes a negative electrode current collector and two lithium layers that are disposed on one surface of the negative electrode current collector and spaced 6 to 12 mm apart in a longitudinal direction,
each of the two lithium layers has a lithium content of 0.014 to 0.017 g/cm² per unit area, and
the negative electrode is wound in such a manner that the negative electrode is folded back between the two lithium layers at a position near one of the lithium layers; the folded negative electrode current collector overlaps itself, and inner peripheral ends of the two lithium layers are respectively located outside a winding center.

2. The cylindrical lithium primary battery according to claim 1, wherein the negative electrode is folded back between the two lithium layers at a position within 1.5 mm from one of the lithium layers.

3. The cylindrical lithium primary battery according to claim 1 or 2, wherein an inner negative electrode current collector of the overlapped negative electrode current collectors has a region with a width of 2 mm or more from the winding center, where no lithium layer is formed.

4. The cylindrical lithium primary battery according to any one of claims 1 to 3, wherein an area of the two lithium layers is 83% or more of an area of the negative electrode current collector.

5. The cylindrical lithium primary battery according to any one of claims 1 to 4, wherein a ratio of the lithium content per unit area of the lithium layer to the manganese dioxide content per unit area of the positive electrode mixture layer is 0.067 to 0.077 in terms of weight ratio.

6. The cylindrical lithium primary battery according to any one of claims 1 to 5, wherein surfaces of the two lithium layers facing the separator are alloyed with aluminum to form a lithium-aluminum alloy, and the lithium-aluminum alloy makes up 90% or more of the area of the two lithium layers.

7. The cylindrical lithium primary battery according to claim 6, wherein a ratio of a total amount of aluminum to a total amount of lithium contained in the two lithium layers provided with the lithium-aluminum alloy is 0.095 to 0.105 in terms of weight ratio.
